# EUROPÄISCHE PATENTSCHRIFT

(11) **EP 3 835 529 B1**
(45) Veröffentlichungstag und Bekanntmachung des Hinweises auf die Patenterteilung: **13.03.2024**
(21) Anmeldenummer: 19214427.7
(22) Anmeldetag: 09.12.2019
(51) Int. Cl.: E05F 15/603, E05F 15/643, H02K 5/04, H02K 5/16, H02K 7/116, H02K 9/22

(54) **TÜRANTRIEB MIT EINER MOTOREINHEIT, AUFWEISEND EINE VORTEILHAFTE LAGERANORDNUNG ZUR LAGERUNG EINER ABTRIEBSWELLE**
DOOR DRIVE WITH A MOTOR UNIT, COMPRISING A BENEFICIAL BEARING ARRANGEMENT FOR MOUNTING A DRIVE SHAFT
ENTRAÎNEMENT DE PORTE DOTÉ D'UNE UNITÉ MOTEUR, COMPORTANT UN AGENCEMENT PALIER AVANTAGEUX PERMETTANT DE LOGER UN ARBRE DE SORTIE

(43) Veröffentlichungstag der Anmeldung: 16.06.2021
(73) Patentinhaber: dormakaba Deutschland GmbH, 58256 Ennepetal (DE)
(72) Erfinder: Finis, Dietmar, 58256 Ennepetal (DE); Finke, Andreas, 58256 Ennepetal (DE); Busch, Sven, 58256 Ennepetal (DE); Wagner, Martin, 58256 Ennepetal (DE)
(74) Vertreter: Balder IP Law, S.L.

(56) Entgegenhaltungen:
- EP-A1- 3 534 504
- EP-A2- 2 757 219
- DE-A1- 10 024 021
- US-A1- 2005 274 078
- US-B2- 8 823 232

## Beschreibung

Die Erfindung betrifft einen Türantrieb zur Anordnung an oder in Verbindung mit einer Türanlage, mit dem zumindest ein Flügelelement der Tür-anlage bewegbar ist, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung gebracht werden kann. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe ist ein Zahnriemen geführt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor quer verläuft und daher sehr bauraumintensiv ist.

Insbesondere dann, wenn die Abtriebswelle zur direkten Aufnahme einer Riemenscheibe in der eingebauten Türanlage horizontal verlaufen soll, muss die Motorbauform vor allem in Erstreckungsrichtung der Abtriebswelle kurz ausfallen, da es sonst zu Bauraumproblemen beim Einbau der Motoreinheit kommt. Dies liegt darin begründet, dass der mit einem Zahnriemen über die Riemenscheibe angetriebene Läufer im Trägerprofil, der zur Aufnahme eines Flügelelementes beispielsweise einer automatischen Schiebetür dient, noch innerhalb des Trägerprofils an der Riemenscheibe vorbeilaufen können muss. Daher sollte die Motoreinheit in Erstreckungsrichtung der Rotorachse möglichst kurzbauend ausfallen.

Einen weiteren Türantrieb offenbart die DE 10 2014 115 932 A1, und der Türantrieb weist als Grundkörper einen einteiligen quaderförmigen Körper auf, in den Aussparungen zwecks Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt. Die Lagerung des Rotors erfolgt mittels einer im quaderförmigen Körper des Türantriebs eingefassten stehenden Achse, wodurch sich aufgrund der einseitig eingefassten Achse ein unvorteilhafter Lastfall ergibt, insbesondere wenn über die Getriebestufe bei großen, schweren Ganzglas-Flügelelementen hohe Kräfte in den Rotor einleitet werden, die über die gegenüberliegend eingefasste, stehende Achse aufgenommen werden müssen.

Grundsätzlich wird bei der Konstruktion von Türantrieben zur Anordnung an oder in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und im Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst kleinbauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um trotz kleiner Baumaße derartige Flügelelemente entsprechend stark beschleunigen und auch wieder verzögern zu können, damit die Türanlage auch mit großen Flügelelementen noch eine geforderte Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Bei einer Motoreinheit mit einem Direktantrieb werden häufig eher niedrige Drehzahlen des Rotors verbunden mit hohen Drehmomenten realisiert, wodurch eine besonders robuste Lagerung des Rotors im Gehäuse der Motoreinheit notwendig wird.

Aufgabe der Erfindung ist die Schaffung einer Türanlage mit einem Türantrieb mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll. Trotz der hohen Integrationsdichte des Türantriebes soll eine kompakte Anordnung der Motoreinheit in Verbindung mit einem Netzteil und einer Steuerung erreicht werden, sowie mit weiteren Komponenten, beispielsweise einem Bedienteil. Dabei soll die Baulänge der Motoreinheit in Erstreckungsrichtung der Abtriebswelle möglichst klein sein. Die Lagerung der Abtriebswelle sollte daher kompakt und robust ausgeführt sein und die Baulänge der Motoreinheit nicht verlängern.

Diese Aufgabe wird ausgehend von Türanlage mit einem Türantrieb gemäß Anspruch 1 gelöst.

Vorteilhafte Weiterbildungen der Erfindung sind in den abhängigen Ansprüchen und in der Beschreibung angegeben.

Die Erfindung schließt die technische Lehre ein, dass die Motoreinheit miteinander verbundene halbschalenförmige Gehäusehälften aufweist, wobei die

Gehäusehälften einen Innenraum definieren, in dem wenigstens der Stator und der Rotor aufgenommen sind, und wobei die Gehäusehälften in den Innenraum ragende Lageraufnahmeabschnitte aufweisen, in denen Lagerelemente zur Lagerung der Abtriebswelle wenigstens abschnittsweise eingebracht sind. Insbesondere sind zwei Gehäusehälften vorgesehen.

Kerngedanke der Erfindung ist die Aufnahme der Lagerelemente in nach innen gestülpten Lageraufnahmeabschnitten, die in den Gehäusehälften ausgebildet sind. Dadurch verlängert sich das Höhenmaß der Motoreinheit nicht durch die Aufnahme der Lagerelemente, und die Gehäusehälften können im Höhenmaß an die Bauhöhe des ringförmigen Stators und des Rotors angepasst werden. Die Aufnahme der Lagerelemente innerhalb der sich über das Höhenmaß gegenüberliegenden Außenflächen, nämlich der Stirnfläche, aus der die Abtriebswelle herausragt, und die Rückseitenfläche, kann so ausgeführt sein, dass die Lagerelemente vollständig innen liegend aufgenommen sind oder die Lagerelemente sind wenigstens abschnittsweise innerhalb des Gehäuses aufgenommen und ragen alternativ nur mit einem Abschnitt aus den Außenflächen hervor, dies jedoch nicht vollständig und nicht überwiegend.

Die innenseitige Aufnahme der Lagerelemente ist besonders dann vorteilhaft, wenn die Motoreinheit die Grundform eines Quaders aufweist und/oder wenn die Gehäusehälften wenigstens mittelbar aneinander anliegend angeordnet und miteinander verschraubt sind, wodurch eine noch kleinere Baugröße entsteht. Ein Quader im vorliegenden Sinne ist ein Körper, der von sechs Rechteckflächen begrenzt wird, wobei die Rechteckflächen im Wesentlichen, aber nicht vollständig, plan sein sollten, also durchaus Anformungen, Wölbungen, Schrägungen, Rippen und dergleichen aufweisen können.

Insofern ist im Sinne der Erfindung die Quaderform der Motoreinheit allenfalls annähernd im mathematischen Sinne zu verstehen; ein Rechteckkörper mit leichten Winkelabweichungen und Formabweichungen fällt damit auch noch unter dem Begriff des Quaders, ohne also am mathematischen Begriff eines Quaders zu haften, beispielsweise wenn die Lagerelemente mit ihren Lageraufnahmeabschnitten abschnittsweise aus der Grundform des Quaders hervorstehen.

Das Gehäuse ist vorteilhafterweise außenseitig mit Planflächen begrenzt, sodass nur die Grundform der Motoreinheit einen Quader bildet, und es kann die Grundform auch als eine quaderförmige Hüllform zu verstehen sein, ohne dass das Gehäuse der Motoreinheit die quaderförmige Hüllform exakt abbildet.

Die so ausgestaltete Motoreinheit kann mit der Quaderform auf vorteilhafte Weise in einen Türantrieb integriert werden, und durch die gebildeten Seitenflächen, die Stirnfläche, sowie eine plane Rückseite ermöglichen einen einfachen Aufbau des Türantriebs mit unmittelbar angrenzenden weiteren Komponenten, insbesondere Komponenten wie das Netzteil, die Steuerung und dergleichen. Insbesondere lässt sich ein quaderförmiger Körper besonders vorteilhaft in oder an einem Trägerprofil mit einem L-Winkelquerschnitt anordnen, beispielsweise mittels seitlich an der Motoreinheit angeordneten Flanschelementen, sodass der Türantrieb insgesamt mit kleineren Abmessungen dimensioniert werden kann und sich die Abtriebswelle quer zwischen den Flanschelementen erstreckt.

Die Gehäusehälften sind halbschalenförmig ausgeführt. Werden die Gehäusehälften miteinander verbunden, kann sich der so gebildete Gehäusekörper zu einem Quader vervollständigen. Die Gehäusehälften müssen dabei nicht zwingend eine exakte Hälfte des Gehäuses bilden, und die Teilungsebene zwischen den Gehäusehälften muss nicht auf einer halben Höhe einer Höhenkante des Quaders liegen. Insofern können auch Gehäusehälften vorgesehen sein, die unterschiedlich bemaßt, gestaltet und dimensioniert sind, diese können jedoch in einer Weise aufeinander gebracht und verbunden werden, dass der Quader zur Bildung des Gehäuses entsteht, und so die Grundform der Motoreinheit bildet.

Die Gehäusehälften sind so ausgestaltet, dass wenigstens der Stator und der Rotor gemeinsam mit der Lagerelementen innenseitig zwischen den Gehäusehälften aufgenommen sind. Die Gehäusehälften werden schalenartig ausgeführt und diese werden mittelbar oder unmittelbar miteinander verbunden. Werden die Gehäusehälften unmittelbar miteinander verbunden, so wird ein umlaufender etwa rechteckförmiger Rand der jeweiligen Gehäusehälfte aufeinander gefügt, wobei bei einer mittelbaren Verbindung der Gehäusehälften miteinander auch ein Zwischenelement zwischen den Gehäusehälften angeordnet sein kann, beispielsweise ein Dichtelement oder dergleichen.

Mit besonderem Vorteil weist der Quader eine Längskante, eine Breitenkante und eine Höhenkante auf, wobei die Längskante größer ist als die Breitenkante und/oder wobei die Breitenkante größer ist als die Höhenkante. Beispielsweise weist die Breitenkante eine Länge von 70 % bis 98 %, insbesondere von 85 % bis 95 % von der Länge der Längskante auf. Die Höhenkante weist eine Länge von 30 % bis 60 %, insbesondere von 40 % bis 50 % von der Länge der Längskante auf. Beträgt die Länge der Längskante beispielsweise 100mm, so weist die Breitenkante eine Länge von beispielsweise 90mm auf, und die Höhenkante weist eine Länge von beispielsweise 40 mm bis 50 mm auf.

Insbesondere dann, wenn die Breitenkante ein geringeres Maß aufweist als die Längskante, kann die Motoreinheit im Türantrieb so integriert werden, dass die Breitenkante sich in der Vertikalen erstreckt, sodass der Türantrieb insbesondere in Anordnung über den Flügelelementen mit einer geringen Bauhöhe ausgelegt werden kann, die bestimmt ist durch die Bauhöhe des Türantriebs, und die Bauhöhe des Türabtriebs ist wiederum bestimmt durch die Breite der Motoreinheit, also durch die Länge der Breitenkante.

Mit weiterem Vorteil spannen die Längskante und die Breitenkante eine Stirnfläche auf, wobei die Abtriebswelle senkrecht auf der Stirnfläche hervorsteht. Auf dem hervorstehenden Abschnitt der Abtriebswelle ist eine Riemenscheibe aufgebracht, und die Stirnfläche kann plan und frei von Befestigungsmitteln ausgeführt sein, sodass der Riemen möglichst nah über der Stirnfläche geführt werden kann, wenn die Riemenscheibe bis vor die Stirnfläche geführt ist.

Weiterhin ist vorteilhafterweise vorgesehen, dass die Gehäusehälften im Metall-Druckgussverfahren hergestellt sind, insbesondere dass die nach innen gestülpten Lageraufnahmeabschnitte mit den Gehäusehälften einteilig und materialeinheitlich ausgebildet sind. Die Lagerelemente sind vorzugsweise als Wälzlager ausgeführt, und bilden damit eine ringförmige Grundstruktur, die die Abtriebswelle umschließt und innenseitig aufnimmt. Außenseitig können die ringförmigen Wälzlager in den Lageraufnahmeabschnitten aufgenommen sein, sodass diese Zylinderabschnitte bilden, in denen die Wälzlager eingepasst sind. Ein Wälzlager kann in den Lageraufnahmeabschnitten axial mit einem Sicherungsring positionsfest gesichert sein, ein weiteres Wälzlager kann axial leicht beweglich im weiteren Lageraufnahmeabschnitt aufgenommen sein, um eine Fest-Los-Lageranordnung zu schaffen.

Erfindungsgemäß weist die Abtriebswelle einen ersten Lagerabschnitt und einen zweiten Lagerabschnitt auf, auf denen jeweils ein Lagerelement aufgenommen ist, wobei zwischen den Lagerabschnitten ein Aufnahmeabschnitt ausgebildet ist, auf dem ein mit Permanentmagneten bestückter Trägerkörper aufgenommen ist. Weiterhin ist vorgesehen, dass der Trägerkörper innenseitig umlaufende Aussparungen aufweist, in denen die Lageraufnahmeabschnitte hineinragen und die Lagerelemente wenigstens teilweise eingebracht sind. Dadurch entsteht eine sehr hohe Integrationsdichte für die Motoreinheit, da die Lagerelemente wenigstens abschnittsweise innerhalb des Trägerkörpers eingebracht sind, sodass sich durch die Lagerelemente die Baugröße der Motoreinheit in der Höhe nicht vergrößert.

Der Trägerkörper weist beispielsweise einen etwa H-förmigen Querschnitt auf, wobei die Lageraufnahmeabschnitte mit den Lagerelementen mit Bezug auf die außenseitig am Trägerkörper angeordneten Permanentmagnete zumindest abschnittsweise innerhalb der Permanentmagnete angeordnet sind. Die Nabe des Trägerkörpers kann zur Vergrößerung der Verbindungslänge verbreitert sein, sodass sich insofern dann eine Abweichung von der H-Form des Trägerkörpers ergibt.

Der Grundkörper des Türantriebes ist vorzugsweise mittels eines Trägerprofils gebildet, wobei die Motoreinheit in Bezug auf eine spätere Einbaulage so zum Trägerprofil ausgerichtet ist, dass die Abtriebswelle eine horizontale Erstreckung aufweist. Der Grundkörper des Türantriebs wird mit besonderem Vorteil mit einem L-förmigen Aluminiumprofil gebildet.

Mit der horizontalen Erstreckung der Abtriebswelle verläuft diese quer zur Längsrichtung des Trägerprofils, so ergibt sich ein Verlauf des Riemens mit vertikal übereinander angeordneten Riemensträngen. Diese Ausführung ist vorteilhaft in Bezug auf die geforderte Bewegung der Flügelelemente und vorteilhaft in Bezug auf eine Integration einer Blockiereinrichtung für die Flügelelemente, die mit den Riemen in Verbindung gebracht werden.

Weiterhin können Flanschelemente am Trägerprofil befestigt werden, sodass die Motoreinheit mittels der Flanschelemente am Trägerprofil angeordnet ist. Die Flanschelemente sind vorzugsweise an seitlich zur Stirnfläche ausgebildeten Seitenflächen der Motoreinheit angeordnet. Die Flanschelemente bilden im Stanz-Biegeverfahren hergestellte Blechbauteile, die so geformt sind, dass der Motor über seine Seitenflächen mit den Flanschelementen im Trägerprofil angebracht werden kann, und die Blechelemente nehmen zugleich auf der einen Seite der Motoreinheit das Netzteil und auf einer gegenüberliegenden Seite des Motors die Steuerung auf. Ferner können ein Bedien- und Anzeigenteil und weitere Komponenten zum Betrieb des Türantriebes mittels der Flanschelemente gleichermaßen im Türantrieb aufgenommen werden.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils, laufen. Der Riemen kann zwischen Riemenscheiben der Türanlage gespannt sein. Eine der Riemenscheiben kann als die Riemenscheibe des erfindungsgemäßen Türantriebs ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer Motoreinheit einer erfindungsgemäßen Türanlage,
- Fig. 2: eine perspektivische Ansicht der Motoreinheit,
- Fig. 3: eine perspektivische Ansicht der Motoreinheit ohne eine obere Gehäusehälfte,
- Fig. 4: eine weitere perspektivische Ansicht der Motoreinheit mit einer abgerückten unteren Gehäusehälfte,
- Fig. 5: eine perspektivische Ansicht der Motoreinheit mit einer abgerückten oberen Gehäusehälfte,
- Fig. 6: eine perspektivische Ansicht des Rotors und
- Fig. 7: eine perspektivische Ansicht der Abtriebswelle.

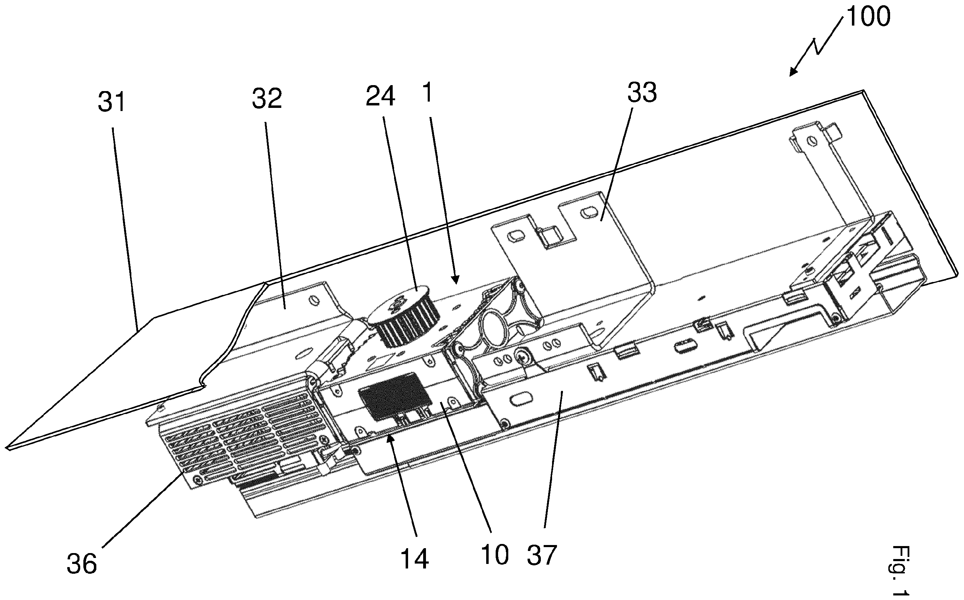

Fig. 1 zeigt eine Gesamtansicht des Türantriebs 100, wie dieser in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage. Die Grundstruktur des Türantriebs 100 bildet ein Trägerprofil 31, welches zur einfacheren Ansicht verkürzt dargestellt ist, zudem ist der wesentliche obere Teil des L-förmigen Trägerprofils 31 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders 14, der das Gehäuse 10 der Motoreinheit 1 bildet. Um einen Abtrieb und damit eine Verbindung zu einem nicht näher dargestellten Flügelelement einer Türanlage zu ermöglichen, ist an der Motoreinheit 1 eine Riemenscheibe 24 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 36 und eine Steuerung 37 auf, und das Netzteil 36 und die Steuerung 37 sind an sich gegenüberliegenden Seiten der Motoreinheit 1 angeordnet. Die Motoreinheit 1 ist mit einem ersten Flanschelement 32 am Trägerprofil 31 befestigt, wobei das erste Flanschelement 32 zugleich das Netzteil 36 mit aufnimmt. Weiterhin ist die Motoreinheit 1 mit einem zweiten Flanschelement 33 mit dem Trägerprofil 31 verbunden, wobei das zweite Flanschelement 33 zugleich die Steuerung 37 aufnimmt. Alternativ ist auch die Ausführung eines einzigen Flansches möglich, um wenigstens die Motoreinheit 1, das Netzteil 36 und die Steuerung 37 aufzunehmen, ferner besteht die Möglichkeit, dass die Motoreinheit 1, das Netzteil 36 und/oder die Steuerung 37 jeweils zugeordnete separate Flanschelemente zur Anordnung im oder am Trägerprofil 31 aufweisen.

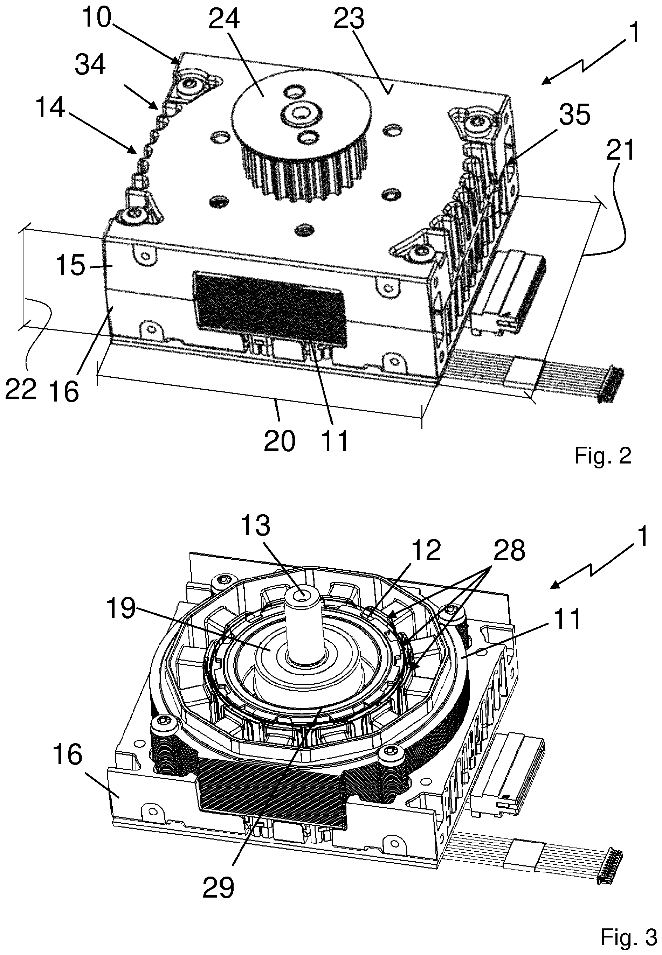

Die Figuren 2 und 3 zeigen jeweils eine perspektivische Ansicht der vereinzelten Motoreinheit 1 mit dem Gehäuse 10, wobei in Figur 3 eine obere Gehäusehälfte entnommen ist, und außerhalb des Gehäuses 10 befindet sich in der Darstellung oberseitig die Riemenscheibe 24 zur Ankopplung eines Zahnriemens oberhalb der Stirnfläche 23 des Gehäuses 10. Das Gehäuse 10 der Motoreinheit 1 weist eine erste obere Gehäusehälfte 15 und eine zweite untere Gehäusehälfte 16 auf, die beispielhaft gleichartig ausgeführt sind, im Rahmen der Erfindung aber nicht gleichartig ausgeführt sein müssen. Seitlich ist das Gehäuse 10 begrenzt durch eine erste Seitenfläche 34 und eine gegenüberliegende zweite Seitenfläche 35, und an den Seitenflächen 34 und 35 können die Flanschelemente 32 und 33 angeordnet werden, die in Fig. 1 gezeigt sind.

Der mit dem Gehäuse 10 gebildete Quader 14 ist bestimmt durch die Längskante 20, die Breitenkante 21 und die Höhenkante 22, wobei die Seitenflächen 34, 35 aufgespannt werden durch die Breitenkante 21 und die Höhenkante 22.

Die vorderseitige Fläche, die durch die Längskante 20 und die Höhenkante 22 aufgespannt wird, weist eine fensterförmige Aussparung auf, aus der ein Flächenabschnitt des Stators 11 herausragt, wobei in Zusammenhang mit dem Stator 11 und seiner Ausgestaltung insbesondere auf Fig. 3 hingewiesen wird. Der nach außen weisende Flächenabschnitt des Stators 11 dient zum wärmeübertragenden Kontakt mit einem weiteren Körper, beispielsweise mit dem Trägerprofil oder mit einem weiteren, separaten Kühlkörper. Dadurch kann trotz des im Wesentlichen geschlossen ausgeführten Gehäuses 10 mit der oberen und unteren Gehäusehälfte 15, 16 der Stator 11 in direkten wärmeübertragenden Kontakt mit einem Motorumbauteil gebracht werden.

In Figur 3 ist aufgrund der entnommenen oberen Gehäusehälfte ein oberes Lagerelement 19 in Form eines Wälzlagers sichtbar, das in einem Lageraufnahmeabschnitt eingebracht ist, das aufgrund der entnommenen oberen Gehäusehälfte 15 nicht sichtbar ist. Das Lagerelement 19 dient zur drehbaren Lagerung der Abtriebswelle 13.

Die Ansicht zeigt weiterhin den Rotor 12 mit dem Trägerkörper 29 und den außenseitig auf dem Trägerkörper 29 aufgebrachten Permanentmagneten 27. Der Trägerkörper weist einen etwa H-förmigen Querschnitt auf, wobei die Lageraufnahmeabschnitte mit den Lagerelementen 19 mit Bezug auf die außenseitig am Trägerkörper 29 angeordneten Permanentmagnete 28 zumindest abschnittsweise innerhals Rotationszylinders der Permanentmagnete 28 angeordnet sind.

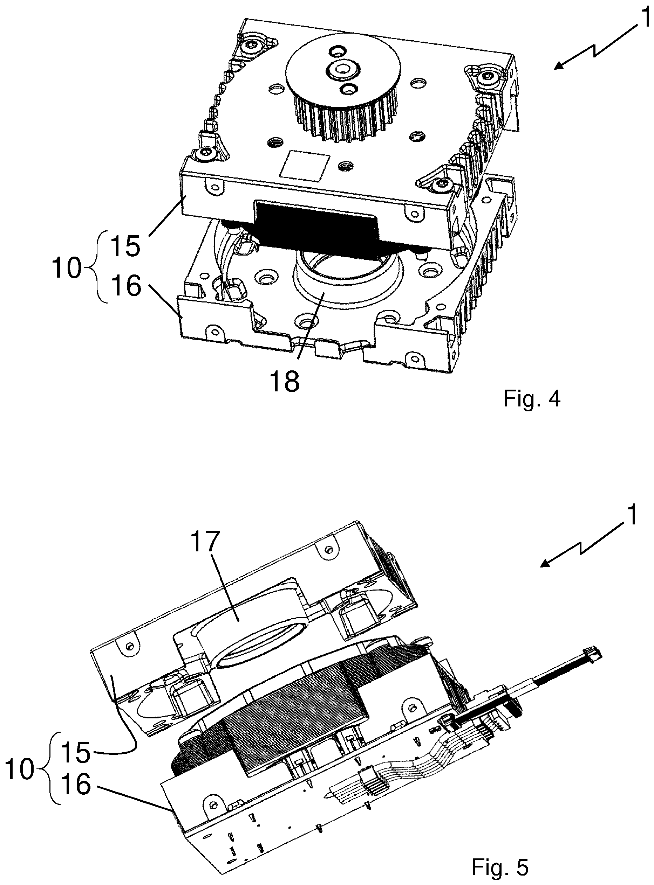

Die Figuren 4 und 5 zeigen die Motoreinheit 1 einmal mit einer unteren abgetrennten Gehäusehälfte 16 (Figur 4) und einmal mit einer oberen abgetrennten Gehäusehälfte 15 (Figur 5), wobei die jeweils gegenüberliegende weitere Gehäusehälfte 15, 16 an der Motoreinheit 1 angeordnet gezeigt ist. Durch die getrennte Ansicht der Gehäusehälften 15, 16 ist der jeweilige Lageraufnahmeabschnitt 17, 18 sichtbar, in welchem jeweils ein Lagerelement 19 aufgenommen ist, wie in Figur 3 gezeigt. Die Lageraufnahmeabschnitte 17, 18 sind einteilig mit der Gehäusehälfte 15, 16 ausgeführt und innenseitig besitzen die Lageraufnahmeabschnitte 17, 18 eine zylindrische Aufnahme für die Lagerelemente 19 in Form von Wälzlagern, insbesondere von Kugellagern.

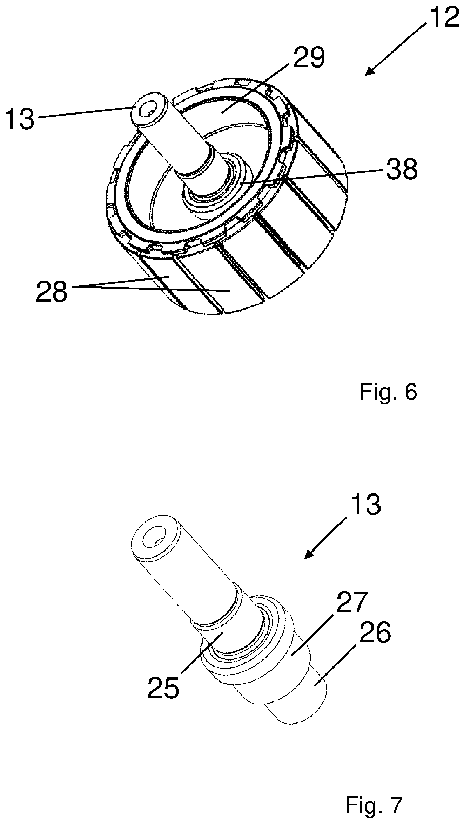

Figur 6 zeigt eine perspektivische Ansicht des Rotors 12 mit der Abtriebswelle 13 und dem Trägerkörper 29, auf dem außenseitig die Permanentmagnete 28 aufgebracht sind. Der Trägerkörper 29 weist im Halbschnitt einen etwa H-förmigen Querschnitt auf, sodass die Lageraufnahmeabschnitte mit den Lagerelementen mit Bezug auf die außenseitig am Trägerkörper 29 angeordneten Permanentmagnete 28 zumindest abschnittsweise innerhalb der Permanentmagnete 28 angeordnet sind. Die Nabe des Trägerkörpers 29 ist zur Vergrößerung der Verbindungslänge mit einem radial umlaufenden Vorsprung 38 versehen, sodass sich mit dem Vorsprung 38 insofern eine Abweichung von der H-Form des Trägerkörpers ergibt.

Die Abtriebswelle 13 gemäß Figur 7 weist einen ersten Lagerabschnitt 25 und einen zweiten Lagerabschnitt 26 auf, auf denen jeweils ein Lagerelement aufgenommen ist, wobei zwischen den Lagerabschnitten 25, 26 ein Rotoraufnahmeabschnitt 27 ausgebildet ist, auf dem der mit den Permanentmagneten 28 bestückte Trägerkörper 29 mit dem Vorsprung 38 aufgenommen ist.

### Bezugszeichenliste

- 100: Türantrieb

- 1: Motoreinheit

- 10: Gehäuse
- 11: Stator
- 12: Rotor
- 13: Abtriebswelle
- 14: Quader
- 15: Gehäusehälfte
- 16: Gehäusehälfte
- 17: Lageraufnahmeabschnitt
- 18: Lageraufnahmeabschnitt
- 19: Lagerelement
- 20: Längskante
- 21: Breitenkante
- 22: Höhenkante
- 23: Stirnfläche
- 24: Riemenscheibe
- 25: Lagerabschnitt
- 26: Lagerabschnitt
- 27: Rotoraufnahmeabschnitt
- 28: Permanentmagnet
- 29: Trägerkörper
- 31: Trägerprofil
- 32: Flanschelement
- 33: Flanschelement
- 34: Seitenfläche
- 35: Seitenfläche
- 36: Netzteil
- 37: Steuerung
- 38: Vorsprung

## Patentansprüche

1. Türanlage mit einem Türantrieb (100) aufweisend wenigstens ein Verbindungselement zum Verbinden mit einem Flügelelement der Türanlage und/oder wenigstens ein Flügelelement, mit dem der Türantrieb (100) antreibend in Wirkverbindung steht, wobei mit dem Türantrieb (100) zumindest das eine Flügelelement der Türanlage bewegbar ist und der Türantrieb (100) aufweisend eine Motoreinheit (1) mit einem Gehäuse (10), in dem ein ringförmiger Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist,
**dadurch gekennzeichnet, dass** die Motoreinheit (1) miteinander verbundene halbschalenförmige Gehäusehälften (15, 16) aufweist, wobei die halbschalenförmigen Gehäusehälften (15, 16) einen Innenraum definieren, in dem wenigstens der Stator (11) und der Rotor (12) aufgenommen sind, und wobei die halbschalenförmigen Gehäusehälften (15, 16) in den Innenraum ragende Lageraufnahmeabschnitte (17, 18) aufweisen, in denen Lagerelemente (19) zur Lagerung der Abtriebswelle (13) wenigstens abschnittsweise eingebracht sind, wobei die Abtriebswelle (13) einen ersten Lagerabschnitt (25) und einen zweiten Lagerabschnitt (26) aufweist, auf denen jeweils ein Lagerelement (19) aufgenommen ist, wobei zur Bildung des Rotors (12) zwischen den Lagerabschnitten (25, 26) ein Aufnahmeabschnitt (27) ausgebildet ist, auf dem ein mit Permanentmagneten (28) bestückter Trägerkörper (29) aufgenommen ist, und wobei der Trägerkörper (29) innenseitig umlaufende Aussparungen aufweist, in denen die Lageraufnahmeabschnitte (17, 18) hineinragen und die Lagerelemente (19) wenigstens teilweise eingebracht sind.

2. Türanlage nach Anspruch 1, **dadurch gekennzeichnet, dass** die Motoreinheit (1) die Grundform eines Quaders (14) aufweist und/oder wobei die Gehäusehälften (15, 16) wenigstens mittelbar aneinander anliegend angeordnet und miteinander verschraubt sind.

3. Türanlage nach Anspruch 1 oder 2, **dadurch gekennzeichnet, dass** das Gehäuse (10) außenseitig mit Planflächen begrenzt ist.

4. Türanlage nach Anspruch 2 oder 3, **dadurch gekennzeichnet, dass** der Quader (14) eine Längskante (20), eine Breitenkante (21) und eine Höhenkante (22) aufweist, wobei die Längskante (17) größer ist als die Breitenkante (18) und/oder wobei die Breitenkante (18) größer ist als die Höhenkante (19).

5. Türanlage nach Anspruch 4, **dadurch gekennzeichnet, dass** die Längskante (20) und die Breitenkante (21) eine Stirnfläche (23) aufspannen, wobei die Abtriebswelle (13) senkrecht aus der Stirnfläche (23) hervorsteht und/oder wobei auf dem Abschnitt der Abtriebswelle (13), die senkrecht aus der Stirnfläche (23) hervorsteht, eine Riemenscheine (24) aufgebracht ist, wobei die Stirnfläche (23) der Motoreinheit (1) plan ausgeführt ist und sich die Riemenscheibe (24) bis vor die Planfläche der Stirnfläche (23) erstreckt.

6. Türanlage nach einem der vorgenannten Ansprüche, **dadurch gekennzeichnet, dass** die Gehäusehälften (15, 16) im Metall-Druckgussverfahren hergestellt sind und/oder dass die nach innen gestülpten Lageraufnahmeabschnitte (17, 18) mit den Gehäusehälften (15, 16) einteilig und materialeinheitlich ausgebildet sind.

7. Türanlage nach einem der vorgenannten Ansprüche, **dadurch gekennzeichnet, dass** die Lagerelemente (19) als Wälzlager ausgebildet sind.

8. Türanlage nach Anspruch 1, **dadurch gekennzeichnet, dass** der Trägerkörper (29) einen etwa H-förmigen Querschnitt aufweist, wobei die Lageraufnahmeabschnitte (17, 18) mit den Lagerelementen (19) mit Bezug auf die außenseitig am Trägerkörper (29) angeordneten Permanentmagnete (28) zumindest abschnittsweise innerhalb der Permanentmagnete (28) angeordnet sind.

9. Türanlage nach einem der vorgenannten Ansprüche, **dadurch gekennzeichnet, dass** ein Grundkörper des Türantriebes (100) mittels eines Trägerprofils (31) gebildet ist, wobei die Motoreinheit (1) in Bezug auf eine spätere Einbaulage so zum Trägerprofil (31) ausgerichtet ist, dass die Abtriebswelle (13) eine horizontale Erstreckung aufweist.

10. Türanlage nach einem der vorgenannten Ansprüche, **dadurch gekennzeichnet, dass** Flanschelemente (32, 33) am Trägerprofil (31) befestigt sind, sodass die Motoreinheit (1) mittels der Flanschelemente (32, 33) am Trägerprofil (31) angeordnet ist.

11. Türanlage nach Anspruch 10, **dadurch gekennzeichnet, dass** die Flanschelemente (32, 33) an seitlich zur Stirnfläche (23) ausgebildeten Seitenflächen (34, 35) der Motoreinheit (1) angeordnet sind.

## Claims

1. A door system with a door drive (100) having at least one connecting element for connecting to a leaf element of the door system and/or at least one leaf element with which the door drive (100) is in operative connection in a driving manner, wherein at least the one leaf element of the door system can be moved with the door drive (100) and the door drive (100) having a motor unit (1) with a housing (10), in which an annular stator (11) is accommodated in a stationary manner and wherein a rotor (12) is arranged so as to be rotatably movable in the housing (10), which has an output shaft (13), wherein the output shaft (13) can be brought into operative connection in a driving manner with the leaf element, **characterized in that** the motor unit (1) has half-shell-shaped housing halves (15, 16) connected to one another, wherein the half-shell-shaped housing halves (15, 16) define an interior in which at least the stator (11) and the rotor (12) are accommodated, and wherein the half-shell-shaped housing halves (15, 16) have bearing receiving sections (17, 18) projecting into the interior, in which bearing elements (19) for supporting the output shaft (13) are introduced at least in sections, wherein the output shaft (13) has a first bearing section (25) and has a second bearing section (26), on each of which a bearing element (19) is accommodated, wherein a receiving section (27) is designed between the bearing sections (25, 26) to form the rotor (12), on which a support body (29) fitted with permanent magnets (28) is accommodated, and wherein the support body (29) has circumferential recesses on the inside, into which the bearing receiving sections (17, 18) protrude and the bearing elements (19) are at least partially inserted.

2. The door system according to claim 1, **characterized in that** the motor unit (1) has the basic shape of a cuboid (14) and/or wherein the housing halves (15, 16) are arranged at least indirectly abutting one another and screwed to one another.

3. The door system according to claim 1 or 2, **characterized in that** the housing (10) is bordered on the outside with flat surfaces.

4. The door system according to claim 2 or 3, **characterized in that** the cuboid (14) has a longitudinal edge (20), a width edge (21) and a height edge (22), wherein the longitudinal edge (17) is larger than the width edge (18) and/or wherein the width edge (18) is larger than the height edge (19).

5. The door system according to claim 4, **characterized in that** the longitudinal edge (20) and the width edge (21) span an end face (23), wherein the output shaft (13) protrudes vertically from the end face (23) and/or wherein a belt pulley (24) is applied on the section of the output shaft (13) which protrudes vertically from the end face (23), wherein the end face (23) of the motor unit (1) is designed to be flat and the belt pulley (24) extends in front of the flat surface of the end face (23).

6. The door system according to one of the preceding claims, **characterized in that** the housing halves (15, 16) are manufactured using the metal die-casting process and/or **in that** the inwardly turned bearing receiving sections (17, 18) are designed in one piece with the housing halves (15, 16) and are designed of the same material.

7. The door system according to one of the preceding claims, **characterized in that** the bearing elements (19) are designed as rolling bearings.

8. The door system according to claim 1, **characterized in that** the support body (29) has an approximately H-shaped cross section, wherein the bearing receiving sections (17, 18) with the bearing elements (19) are arranged at least partially inside the permanent magnets (28) in relation to the permanent magnets (28) arranged on the outside of the support body (29).

9. The door system according to one of the preceding claims, **characterized in that** a base body of the door drive (100) is formed by means of a support profile (31), wherein the motor unit (1) is aligned with the support profile (31) in relation to a later installation position such that the output shaft (13) has a horizontal extension.

10. The door system according to one of the preceding claims, **characterized in that** flange elements (32, 33) are attached to the support profile (31) such that the motor unit (1) is arranged on the support profile (31) by means of the flange elements (32, 33).

11. The door system according to claim 10, **characterized in that** the flange elements (32, 33) are arranged on side surfaces (34, 35) of the motor unit (1) which are formed laterally to the end face (23).

## Revendications

1. Système de porte comportant un entraînement de porte (100) présentant au moins un élément de liaison destiné à être relié à un élément de battant du système de porte et/ou au moins un élément de battant avec lequel l'entraînement de porte (100) est en liaison fonctionnelle d'entraînement, dans lequel au moins l'un élément de battant du système de porte est mobile avec l'entraînement de porte (100) et l'entraînement de porte (100) présente une unité moteur (1) avec un boîtier (10) dans lequel un stator annulaire (11) est reçu au repos et dans lequel un rotor (12) est agencé rotatif dans le boîtier (10), qui présente un arbre de sortie (13), dans lequel l'arbre de sortie (13) peut être amené en liaison fonctionnelle d'entraînement avec l'élément de battant, **caractérisé en ce que** l'unité moteur (1) présente des moitiés de boîtier (15, 16) en forme de demi-coquille reliées l'une à l'autre, dans lequel les moitiés de boîtier (15, 16) en forme de demi-coquille définissent un espace intérieur dans lequel au moins le stator (11) et le rotor (12) sont reçus, et dans lequel les moitiés de boîtier (15, 16) en forme de demi-coquille présentent des sections de réception de palier (17, 18) faisant saillie dans l'espace intérieur, dans lesquelles des éléments de palier (19) destinés à supporter l'arbre de sortie (13) sont introduits au moins par sections, dans lequel l'arbre de sortie (13) présente une première section de palier (25) et une seconde section de palier (26), sur chacune desquelles est reçu un élément de palier (19), dans lequel une section de réception (27) est formée entre les sections de palier (25, 26) pour former le rotor (12), sur laquelle est reçu un corps de support (29) équipé d'aimants permanents (28), et dans lequel le corps de support (29) présente des évidements circonférentiels à l'intérieur, dans lesquels font saillie les sections de réception de palier (17, 18) et les éléments de palier (19) sont introduits au moins partiellement.

2. Système de porte selon la revendication 1, **caractérisé en ce que** l'unité moteur (1) présente la forme de base d'un parallélépipède rectangle (14) et/ou dans lequel les moitiés de boîtier (15, 16) sont agencées au moins indirectement l'une à côté de l'autre et sont vissées ensemble.

3. Système de porte selon la revendication 1 ou 2, **caractérisé en ce que** le boîtier (10) est délimité extérieurement par des surfaces planes.

4. Système de porte selon la revendication 2 ou 3, **caractérisé en ce que** le parallélépipède rectangle (14) présente un bord en longueur (20), un bord en largeur (21) et un bord en hauteur (22), dans lequel le bord en longueur (17) est plus grand que le bord en largeur (18) et/ou dans lequel le bord en largeur ( 18) est plus grand que le bord en hauteur (19).

5. Système de porte selon la revendication 4, **caractérisé en ce que** le bord en longueur (20) et le bord en largeur (21) s'étendent sur une face frontale (23), dans lequel l'arbre de sortie (13) dépasse perpendiculairement de la face frontale (23) et/ou dans lequel sur la section de l'arbre de sortie (13) qui dépasse perpendiculairement de la face frontale (23), une cale de courroie (24) est appliquée, dans lequel la face frontale (23) de l'unité moteur (1) est réalisée plate et la cale de courroie (24) s'étend jusque devant la face plane de la face frontale (23).

6. Système de porte selon l'une des revendications précédentes, **caractérisé en ce que** les moitiés de boîtier (15, 16) sont fabriquées par moulage sous pression de métal et/ou que les sections de réception de palier (17, 18) retournées vers l'intérieur sont conçues d'une seule pièce avec les moitiés de boîtier (15, 16) et du même matériau.

7. Système de porte selon l'une des revendications précédentes, **caractérisé en ce que** les éléments de palier (19) sont conçus comme des paliers à roulement.

8. Système de porte selon la revendication 1, **caractérisé en ce que** le corps de support (29) présente une section transversale approximativement en forme de H, dans lequel les sections de réception de palier (17, 18) avec les éléments de palier (19) sont agencées au moins partiellement à l'intérieur des aimants permanents (28) par rapport aux aimants permanents (28) agencés à l'extérieur du corps de support (29).

9. Système de porte selon l'une des revendications précédentes, **caractérisé en ce qu'**un corps de base de l'entraînement de porte (100) est formé au moyen d'un profilé porteur (31), dans lequel l'unité moteur (1) est alignée avec le profilé porteur (31) par rapport à une position de montage ultérieure, de sorte que l'arbre de sortie (13) présente une extension horizontale.

10. Système de porte selon l'une des revendications précédentes, **caractérisé en ce que** des éléments de bride (32, 33) sont fixés au profilé porteur (31), de sorte que l'unité moteur (1) est agencée sur le profilé porteur (31) au moyen des éléments de bride (32, 33).

11. Système de porte selon la revendication 10, **caractérisé en ce que** les éléments de bride (32, 33) sont agencés sur des surfaces latérales (34, 35) de l'unité moteur (1) qui sont formées latéralement par rapport à la face frontale (23).
